(19) **Europäisches Patentamt European Patent Office Office européen des brevets**

(11) **EP 4 764 606 A1**

(12) **EUROPEAN PATENT APPLICATION**

(43) Date of publication:
24.06.2026 Bulletin 2026/26

(21) Application number: 25218430.4

(22) Date of filing: 25.11.2025

(51) International Patent Classification (IPC):
G01S 13/82 (2006.01)    G01S 13/42 (2006.01)
H04W 16/28 (2009.01)    G01S 7/35 (2006.01)

(52) Cooperative Patent Classification (CPC):
G01S 13/82; G01S 7/356; G01S 13/42

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.12.2024 US 202418987006

(71) Applicant: INTEL Corporation
Santa Clara, CA 95054 (US)

(72) Inventors:
• HEWAVITHANA, Thushara
  Chandler, 85249 (US)
• HAMIDI-SEPEHR, Fatemeh
  San Jose, 95117 (US)
• MERWADAY, Arvind
  San Jose, 95110 (US)
• VANNITHAMBY, Rath
  Portland, 97229 (US)
• CAVATUR, Ranjit
  San Marcos, 92078 (US)

(74) Representative: 2SPL Patentanwälte PartG mbB
Landaubogen 3a
81373 München (DE)

(54) **METHOD AND APPARATUS FOR RADAR SENSING IN A DISAGGREGATED RADIO ACCESS NETWORK**

(57) A method and apparatus for radar sensing in a disaggregated radio access network. The apparatus includes interface circuitry to receive data from a radio unit and processing circuitry to perform radar sensing processing on the received data to determine at least one of range, velocity, or direction of at least one target in an environment. The radar sensing processing includes range processing, Doppler processing, two-dimensional range-Doppler periodogram processing, constant false alarm rate (CFAR) detection processing, angular resolution processing, and post processing. The data received from the radio unit is beam domain data obtained by receive beamforming, and the processing circuitry is configured to perform decompression processing for converting the beam domain data to antenna domain data and perform at least the angular resolution processing and the post processing on the antenna domain data. The processing circuitry may perform the decompression processing after the CFAR detection processing.

300

FIG. 3

## Description

### Background

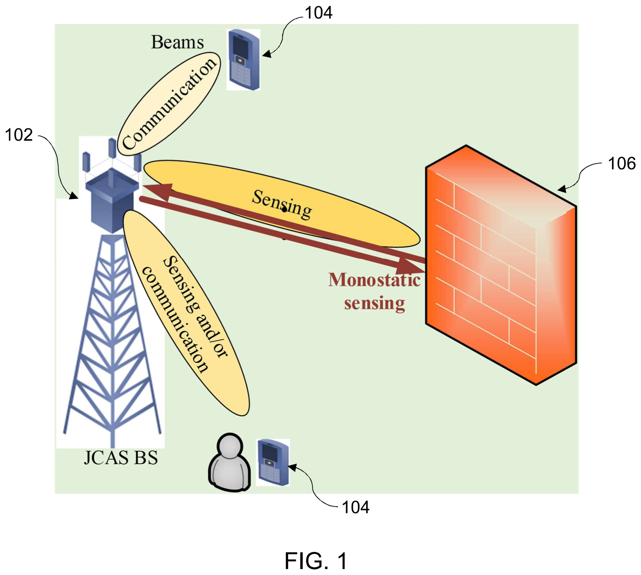

The next generation communication networks such as Fifth Generation (5G) and Sixth Generation (6G) networks will have radar sensing integrated within the communication networks, i.e., Integrated Sensing and Communication (ISAC). ISAC, also referred to as Joint Communication and Sensing (JCAS), integrates sensing and spatial location of passive objects into the mobile communication network, expanding the network's functionality beyond just communication. The network equipment deployed for communication can be reused for ISAC. In ISAC, the radio access network (RAN) infrastructure (e.g., base stations) will not only perform communications, but will also be capable of environment sensing natively. FIG. 1 shows joint communication and monostatic sensing using a base station as a sensing transmitter and receiver. The base station 102 performs communication with user devices 104 using wireless signals and sensing for the detection, localization, and characterization of objects 106 or environments using signals, such as radar.

Several applications which can use the sensing data include digital twin, traffic management, industrial manufacturing, autonomous vehicle, etc. Depending on the intended sensing use case, the system needs to be able to support the required field of view (FoV). FoV is defined by the span of range and angle (both azimuth and elevation). Furthermore, different use cases may also have different requirements on the field of view from both angle span and maximum range point of view.

### Brief description of the Figures

Some examples of apparatuses and/or methods will be described in the following by way of example only, and with reference to the accompanying figures, in which

FIG. 1 shows joint communication and monostatic sensing using a base station as a sensing transmitter and receiver;
FIG. 2 illustrates radar sensing (environment sensing) implemented in a disaggregated RAN;
FIG. 3 is a block diagram of an example apparatus for radar sensing in a disaggregated radio access network;
FIG. 4 shows a transmit (TX) beam for covering a segment of FoV and receive (RX) beams to encompass the FoV segment covered by the TX beam;
FIG. 5 shows an example system and signal processing flow for environment sensing in an Open-RAN (O-RAN) compatible network;
FIG. 6 shows another example system and signal processing flow for sensing in an O-RAN-compatible network;
FIG. 7 shows another example system and signal processing flow for sensing in an O-RAN compatible network for low complexity and high efficiency implementation;
FIG. 8 shows an example of alternative RU-DU function split for sensing processing in an O-RAN compatible network;
FIG. 9 shows an example of alternative RU-DU function split for sensing processing without uplink beamforming (RX beamforming) in an O-RAN compatible network;
FIG. 10 is a flow diagram of an example method for radar sensing in a disaggregated radio access network;
FIG. 11 illustrates a user device in which the examples disclosed herein may be implemented; and
FIG. 12 illustrates a base station or infrastructure equipment radio head in which the examples disclosed herein may be implemented.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In recent years, the radio access network (RAN) architecture has evolved into a disaggregated architecture. A disaggregated wireless network refers to a network architecture where traditionally integrated functions and hardware components are decoupled into separate entities. In a RAN, the RAN functions are split into radio units (RUs) and distributed units (DUs). An RU and a DU (i.e., baseband processing unit) are deployed in different locations and are connected by a fronthaul (FH) transport. The fronthaul is normally implemented using fiber links, for example, 25 Gigabit Passive Optical Network (25G PON).

O-RAN is an ongoing shift in mobile network architectures that enables service providers to use non-proprietary subcomponents from a variety of vendors. O-RAN compatible RAN networks are beginning to get deployed around the world. Open RAN (O-RAN) has defined the standard interface for the fronthaul between the RU and the DU to support an open system for RAN where vendors can independently design the RU and DU products in an interoperable manner.

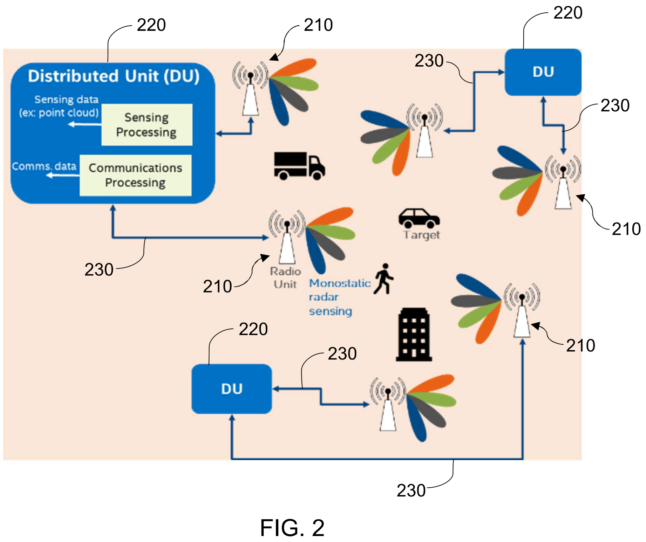

FIG. 2 illustrates radar sensing (environment sensing) implemented in a disaggregated RAN. The disaggregated RAN includes a plurality of RUs 210 and a plurality of DUs 220. A DU 220 is a processing component in the RAN that handles layer 1 and layer 2 functions in the protocol stack such as encoding, decoding, scheduling, medium access control functions, etc. The DU 220 connects to a centralized unit (not shown) via an F1 interface and to the RU 210 through the fronthaul interface 230. The RU 210 is the component closest to the antenna and is responsible for handling the radio frequency (RF) transmissions and receptions over the air. The RU 210 performs RF modulation/demodulation and transmission/reception to/from user devices. In the downlink, the RU 210 receives data from the DU 220, converts it into RF signals, and transmits it through the antennas. In the uplink, the RU 210 receives RF signals from the user devices, demodulates it, and sends them to the DU 220.

In FIG. 2, the communication infrastructure (the RAN) is also used for sensing, i.e., the RAN is used as a sensor. As shown in FIG. 2, the RU 210 may use transmit (TX) and receive (RX) beamforming in performing radar sensing. The sensing may be mono-static sensing (as shown in FIG. 1) or bi-static or multi-static. RF signals (e.g., OFDM waveform) are transmitted over the air by the RU 210, and the reflections of the RF signals are received by the RU 210 and analyzed by the DU 220 to obtain information about the environment/targets. The distance of an object can be determined by analyzing the time delay. The relative velocity of an object to the radar can be attained from the frequency shift on RF signals (e.g., the OFDM symbol). Angular processing may also be performed to determine the direction of the objects. The DU 220 performs sensing processing in addition to the conventional wireless communications processing.

One of the key characteristics of the disaggregated RAN architecture is that the fronthaul interface 230 between an RU 210 and a DU 220 is constrained. Combined with massive multiple-input multiple-output (MIMO) RUs, this presents unique challenge of how to transfer uplink received signals from all antennas (i.e., antenna domain data) from the RU 210 to the DU 220 through the limited fronthaul capacity. In O-RAN Cat B RU, uplink beamforming is applied in an RU to reduce the number of antenna streams to the number of beams. For example, 64 antenna streams could be compressed into 8 beams (streams) that can be easily accommodated in the fronthaul. In case of sensing, where a base station receives the reflected signals from objects and processes them to extract information about the objects, a sensing signal from individual RX antennas is needed for super resolution angle estimation. Currently, there is no sensing solution compatible with the disaggregated RAN architecture.

Examples are disclosed herein for a method and apparatus for radar sensing in disaggregated radio access networks. The sensing solutions disclosed herein may leverage the O-RAN architecture, while conforming to the constraints such as the fronthaul limitations between an RU and a DU and achieving the required FoV and the super resolution angle detection capabilities.

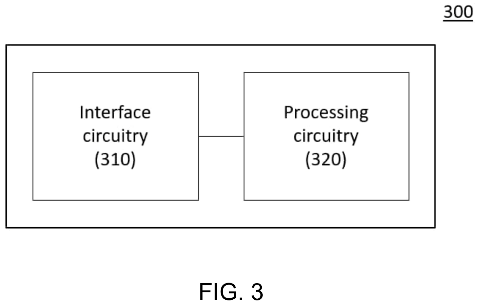

FIG. 3 is a block diagram of an example apparatus for radar sensing in a disaggregated radio access network. The apparatus 300 (distributed unit) includes interface circuitry 310 and processing circuitry 30. The interface circuitry 310 is configured to receive data from a radio unit. The processing circuitry 320 is configured to perform radar sensing processing on the received data to determine at least one of range, velocity, or direction of at least one target in an environment. The radar sensing processing includes range processing, Doppler processing, two-dimensional range-Doppler periodogram processing, constant false alarm rate (CFAR) detection processing, angular resolution processing, and post processing. The data received from the radio unit is beam domain data obtained by receive beamforming, and the processing circuitry 320 is further configured to perform decompression processing for converting the beam domain data to antenna domain data and perform at least the angular resolution processing and the post processing on the antenna domain data.

In some examples, the processing circuitry 320 may be configured to perform the decompression processing after the CFAR detection processing and perform the angular resolution processing and the post processing on the antenna domain data. The processing circuitry 320 may be configured to perform the angular resolution processing only on selected peak range-Doppler bins data of a range-Doppler periodogram. The processing circuitry 320 may be configured to perform the decompression processing and the angle resolution processing using a machine learning model. For example, a machine learning model may be trained to do the angle resolution processing by taking range-Doppler bins data in a beam domain.

In some examples, the processing circuitry 320 may be configured to perform the decompression processing before the range processing and perform all the radar sensing processing on the antenna domain data.

The data received from the radio unit may be orthogonal frequency division multiplex (OFDM) demodulated data and the processing circuitry 320 may be configured to perform subcarrier equalization on the OFDM demodulated data. The processing circuitry 320 may be configured to perform the angular resolution processing using Multiple Signal Classification (MUSIC) or Signal Parameters via Rotational Invariance Techniques (ESPRIT) algorithm.

In some alternative examples, the interface circuitry 310 may be configured to receive data from a radio unit and the processing circuitry 320 may be configured to perform radar sensing processing on the received data to determine at least one of range, velocity, or direction of at least one target in an environment, wherein the radar sensing processing includes angular resolution processing and post processing. In this example, the data received from the radio unit is detected range-Doppler bins data selected by the radio unit after performing range processing, Doppler processing, two-dimensional range-Doppler periodogram processing, and CFAR detection processing. The detected range-Doppler bins data received from the radio unit may be beam domain data, and the processing circuitry 320 may be configured to perform decompression processing to convert the beam domain data to antenna domain data and perform the angular resolution processing and the post processing on the antenna domain data. Alternatively, the detected range-Doppler bins data received from the radio unit may be antenna domain data, and the processing circuitry 320 may be configured to perform the angular resolution processing and the post processing on the received antenna domain data. The processing circuitry 320 may be configured to perform the angular resolution processing using MUSIC or ESPRIT algorithm.

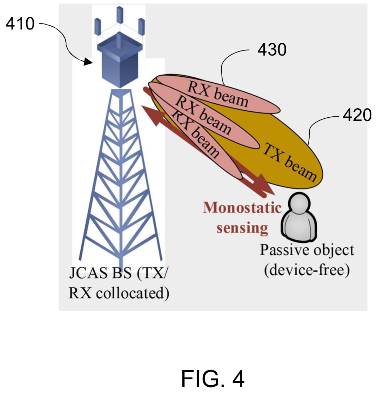

In some examples, the RU may implement transmit (TX) beamforming and/or receive (RX) beamforming for radar sensing. FIG. 4 shows a TX beam 420 for covering a segment of FoV and RX beams 430 to encompass the FoV segment covered by the TX beam 420. FIG. 4 shows mono-static sensing where the transmitter and the receiver are co-located. Alternatively, bi-static sensing or multi-static sensing may also be implemented. In some examples, the RU 410 may generate a TX beam 420 and may also generate one or more RX beams 430 in the direction of the TX beam 420. Alternatively, RX beamforming may not be implemented. The TX beam 420 (a directional beam) illuminates a part of the overall FoV. Over time, the full FoV is scanned with multiple TX beams. The width of the TX beam or the part of FoV scanned in any given time is determined by balancing several factors, such as a range span (the maximum range), the number of RX streams (beams) that can be carried in the fronthaul, availability of resources (e.g., the number of orthogonal frequency division multiplex (OFDM) symbols) for scanning the FoV, etc. On a sensing receiver side, the RU 410 may apply RX beamforming to create a set of (orthogonal) RX beams to cover the part of the FoV covered by the TX beam. TX beamforming may be used to enable a longer range by focusing the TX energy into a TX beam direction. TX beamforming also enables the receiver to use only few beams to capture all the energy from the TX beams which gives the beam-space compression needed to fit data into the fronthaul.

One of the design goals of the example schemes disclosed herein is to ensure that the number of RX beams needed is low enough to get sufficient beam compression, i.e., conversion of data from the antenna domain into the angular (beam) domain. Orthogonality of the RX beams ensure decompression of beam domain streams into antenna domain streams to be able to perform super resolution angle processing. In examples, beam compression may also be leveraged to reduce the complexity of the sensing processing.

There is Fourier relationship between the antenna element positions and the angular domain. Particularly, Fourier duality exists between the normalized angular frequency (NAF), $l$, and the antenna aperture line (AAL), $x'$. This Fourier duality reflects the reciprocal relationship between the angular spectrum of a signal (frequency domain) and the spatial distribution (aperture plane) of an antenna. An antenna aperture's spatial field distribution (in the spatial domain) determines the angular spectrum of the radiated or received wave (in the angular frequency domain). This is mathematically captured by a Fourier transform. The angular frequency is typically normalized to the wavelength or spatial frequency of the wave.

Consider a uniform linear array with N equally spaced (by d) array elements. The absolute position of these array elements is defined as:

$$\varkappa = \{x_0, \cdots, x_{N-1}\} \text{ with } x_n = \left(-\frac{N-1}{2} + n\right)d, n = 0, \cdots, N - 1,$$

$$AAL \;\; x' = \frac{x}{d},$$

$$NAF \;\; l = d\frac{sin(\theta)}{\lambda}.$$

This means that one domain (beam domain or antenna domain) can be obtained as the (inverse) Fourier transform of the other (antenna domain or beam domain). AAL $x'$ is a virtual position axis with unitary antenna spacing. Increasing the antenna element spacing (d) beyond the half wavelength $(\lambda/2)$ gives better antenna diversity and angular resolution, due to larger array aperture, but at the cost of aliasing (ambiguity) in angular domain.

To avoid aliases in NAF over interval [$-d/\lambda$, $d/\lambda$], AAL axes need to be sampled by keeping a gap between the antennas of the uniform linear antenna, satisfying the following condition,

$$1 \geq \frac{2d}{\lambda} \leftrightarrow d \leq \frac{\lambda}{2}.$$

Similar to Fourier basis, beamforming can be done with an orthogonal codebook. It is not necessary for the beams to be orthogonal for the schemes disclosed herein to work. However, orthogonality of RX beams ensures easier decompression transformation from the NAF domain (beam domain) back to the AAL domain (antenna domain). In examples, super resolution angle processing can be applied in the AAL domain and beam compression may be leveraged to reduce the complexity of the sensing processing.

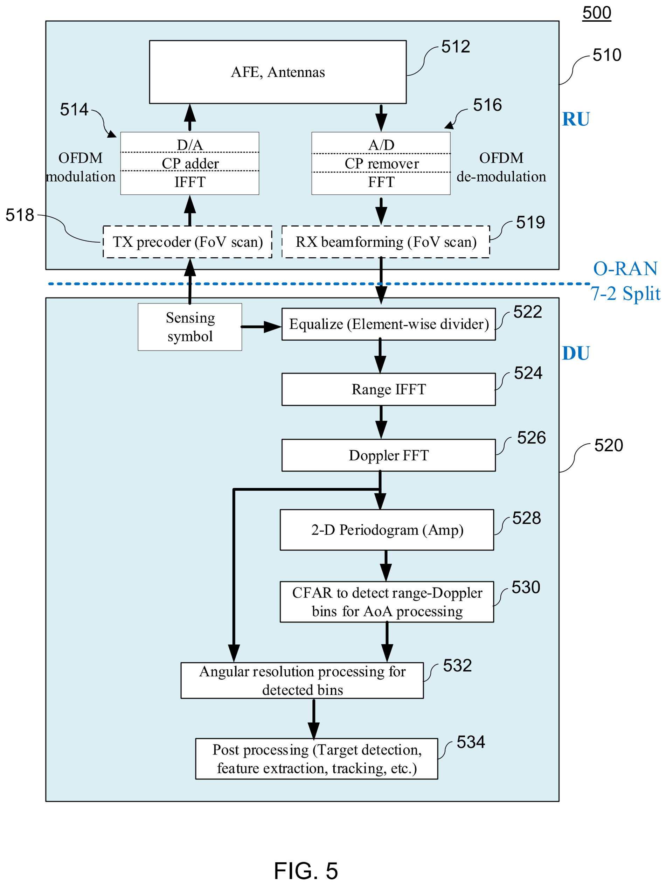

FIG. 5 shows an example system and signal processing flow for environment sensing in an O-RAN-compatible network. The system 500 includes an RU 510 and a DU 520. The functionalities of the RAN are split between the RU 510 and the DU 520. This example shows O-RAN 7-2 split, but the functionalities may be split differently. The O-RAN 7-2 split is a functional division within the O-RAN architecture that separates processing tasks between the DU 520 and the RU 510. This split occurs within the physical layer of the protocol stack, dividing it into high physical layer and low physical layer components.

The system 500 implements OFDM-based radar sensing. The system 500 uses OFDM waveforms/signals for both radar sensing and communications (data transmissions). The conventional wireless communication systems, such as Wi-Fi, 5G, and 6G, etc., utilize OFDM. The system 500 uses the OFDM-based radar sensing technique that leverages the inherent properties of OFDM signals.

The RU 510 includes an antenna front end 512 including an antenna, an OFDM modulator 514 and an OFDM demodulator 516, a TX precoder 518, and an RX beamformer 519. The antenna front end is the components and circuitry that directly interface with the antenna, including a low-noise amplifier, a power amplifier, filters, mixers, switches and duplexers, matching networks, etc. The antenna may be an array antenna including a plurality antenna elements. For the environment sensing, the RU 510 may use different antennas for transmission of the probing signal and reception of the echo of the probing signal. Alternatively, the RU 510 may use the same antennas for transmission of the probing signal and reception of the echo of the probing signal while implementing transmit signal cancellation, or the like.

The RU 510 may perform TX beamforming for covering a segment of FoV each time and scan the full FoV with multiple TX beams. The TX precoder 518 may apply a beamforming matrix to the transmit data for TX beamforming. The OFDM modulator 514 performs OFDM modulation on the pre-coded data for TX beamforming. The OFDM modulation processing includes inverse fast Fourier transform (IFFT) processing and cyclic prefix (CP) insertion, and the resulting OFDM symbol is then converted to analog domain by a digital-to-analog converter. The RU 510 transmits an OFDM signal over multiple subcarriers via the antenna. The transmitted OFDM signal acts as a probing signal for radar sensing. The transmitted OFDM signal reflects off objects in the environment. The reflections (echoes) carry information about the object's properties, including distance and motion. The RU 510 captures the reflected signals via the antenna. The received signal on each antenna are converted to digital domain by analog-to-digital converter, and the OFDM demodulator 516 performs OFDM demodulation, which includes CP removal and fast Fourier transform (FFT) processing. The RU 510 may perform RX beamforming. The RX beamformer 519 may perform RX beamforming by multiplying an RX beamforming matrix to the OFDM demodulated data. The RX beamformer 519 may perform the RX beamforming in the direction of the corresponding TX beam.

The beamforming weights (both TX and RX) are controlled by the DU 520. O-RAN specification specifies several ways that the DU 520 can program the beamforming weights into the RU 510. For example, the DU 520 can send the full beamforming weight matrices to the RU 510 to be used in beamforming.

The reflections of the transmitted signal (probing signal) are captured by each of the antennas (e.g., antenna elements in an array antenna) and processed through OFDM demodulation in the RU. This data is referred to as "antenna aperture line domain data," "antenna domain data," or "data in the antenna domain." The data after the OFDM demodulation is then combined (multiplied by the RX beamforming matrix) to form RX beams. The data after the RX beamforming is referred to as "RX beams," "beam domain data" or "data in the beam domain." For example, the probing signal may be captured by 64 antennas (antenna elements) and then compressed into 8 RX beams. The number of antennas and RX beams are merely an example and more or less antennas and RX beams may be employed. In this example, the antenna domain data is data streams from the 64 antennas and the beam domain data is the 8 data streams obtained from the RX beamforming.

The DU 520 includes an equalizer 522 and circuitry for radar sensing processing (environment sensing processing). In this example, the circuitry for radar sensing is configured to perform range processing 524, Doppler processing 526, two-dimensional (2D) periodogram processing 528, CFAR detection processing 530, angular resolution processing 532, and post processing 534.

The equalizer 522 (e.g., an element-wise divider) is part of the channel equalization process to compensate for the effects of the channel on the transmitted signal. In an OFDM system, the transmitted symbols on each subcarrier are affected by the channel's frequency response which varies with frequency. The receiver (the DU 520 in this example) compensates for the channel's effect by dividing the received signal by the channel estimate. The equalizer 522 ensures that the channel-induced distortion is removed for each subcarrier of the OFDM symbol independently.

The radar sensing processing performed by the DU 520 involves multiple signal processing steps to extract useful information, such as range, velocity, and direction of targets.

The range processing 524 and the Doppler processing 526 are key techniques in object sensing used to determine the distance (range) and relative velocity (speed) of objects. Ranging is the process of measuring the distance between the sensor and an object. Doppler processing is the process of determining the relative speed between the sensor and an object by analyzing changes in the frequency of the reflected signal (called Doppler shift) occurred due to the relative motion between the object and the sensor. The range and Doppler processing 524/526 may utilize fast Fourier transform (FFT) and inverse fast Fourier transform (IFFT) to analyze the frequency characteristics of the signals for measurement of range and Doppler (velocity) data.

Range processing 524 (e.g., range IFFT processing) is performed to determine the distance (range) of targets by analyzing the reflected radar signal's time delay. An IFFT may be performed on the sampled received signal to convert it from the time domain to the frequency domain. The frequency peaks in the spectrum correspond to different ranges of targets.

Doppler processing 526 (e.g., Doppler FFT processing) is performed to estimate the velocity of the targets by analyzing the Doppler shift. Several OFDM symbols are transmitted and received during a coherent processing interval and the phase shift between successive OFDM symbols corresponds to the target's velocity due to the Doppler effect.

2D periodogram processing 528 is to analyze the power spectrum of the signal across both range and Doppler dimensions. The range processing is performed to obtain range bins, and the Doppler processing is performed to obtain velocity bins. The squared magnitudes of the outputs are computed for both range and Doppler dimensions to generate a 2D periodogram (i.e., a range-Doppler map). In the 2D range-Doppler periodogram, the x-axis represents the range bins, the y-axis represents the Doppler bins, and the intensity represents the signal power. The 2D range-Doppler periodogram is used to identify the targets with specific range and velocity.

CFAR detection is to determine a power threshold above which any return can be considered to originate from a target as opposed to one of the spurious sources. The threshold level is raised and lowered to maintain a constant probability of false alarm. In detection systems, environmental noise and clutter (unwanted echoes) can vary significantly. If the detection threshold is set too low, the system will pick up too many false alarms from noise or clutter. If the detection threshold is set too high, it may miss real targets. CFAR dynamically adjusts the threshold based on the background noise, balancing the need to detect true targets while keeping false alarms under control.

The CFAR detection processing 530 is to detect targets in the presence of noise or interference while maintaining a constant false alarm rate. For each cell in the 2D range-Doppler map, a guard window is defined around the cell being tested and a reference window surrounding the guard window. The noise level is estimated by averaging the power levels in the reference window excluding the guard window. A detection threshold is set based on the noise level and a scaling factor (determined by the desired false alarm rate). The signal power in the test cell is then compared against the threshold. If the signal power exceeds the threshold, a target is declared.

The angular resolution processing 532 is performed for determining the direction of the targets and enhancing spatial resolution. The angular resolution processing 532 analyzes the phase differences across the antenna elements to estimate the direction of the object. For example, Multiple Signal Classification (MUSIC) or Signal Parameters via Rotational Invariance Techniques (ESPRIT) algorithm, etc. may be used for the angular resolution processing. MUSIC is an algorithm used for estimating the direction of arrival (DoA) of multiple signals. MUSIC is applied in radar, sonar, wireless communications, and other array signal processing applications to precisely estimate the angles at which incoming signals (from multiple sources) reach an antenna array. ESPRIT is a high-resolution signal processing algorithm used primarily for estimating the parameters of multiple signal sources, such as their frequencies, angles of arrival, or spatial locations. Post processing 534 is performed for target detection, feature extraction, tracking, etc.

In examples, it is ensured that the number of RX beams needed is low enough to get sufficient beam compression (conversion of antenna domain data to beam domain data). Given the RX beams have converted signals from the antenna domain to the beam domain, each received beam can be considered to represent signal from the spatial direction of the beam. Targets detected during the CFAR detection can be attributed to the direction of the RX beams where the targets belong. This gives angle resolution equal to the beam spacing.

In this example shown in FIG. 5, the angular resolution processing 532 may be performed after the 2D periodogram computation 528 and the CFAR detection processing 530. This way, the angle estimation can be unambiguously associated to the detected target, and the angular processing can be performed only on the cells in the 2D periodogram with detected targets, instead of processing all cells of the 2D periodogram, thereby reducing the computational requirements.

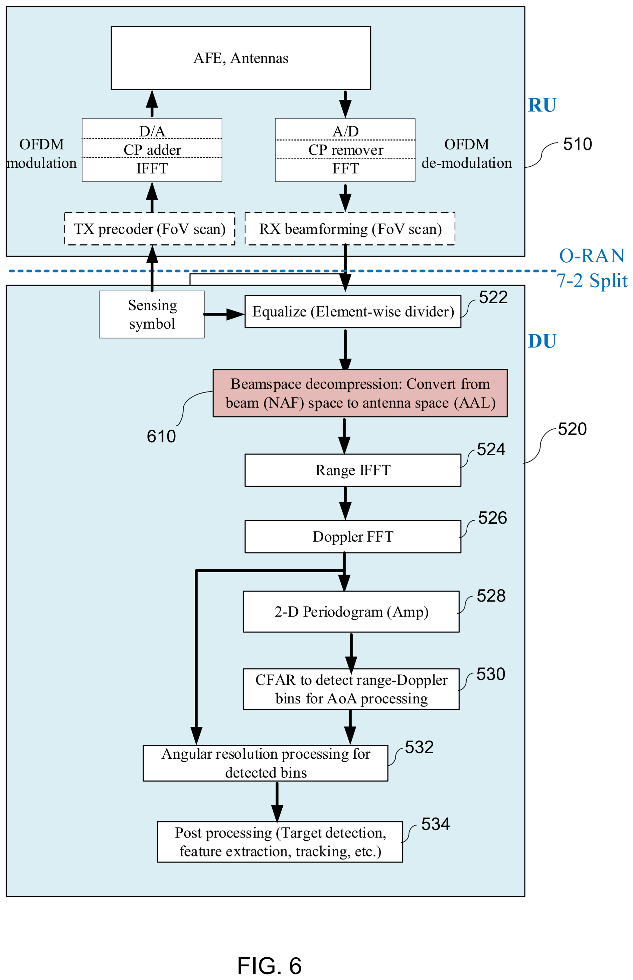

FIG. 6 shows another example system and signal processing flow for sensing in an O-RAN-compatible network. The system architecture and the signal processing flow in FIG. 6 are substantially similar to those in FIG. 5. Therefore, the same elements and processing steps will not be explained again for simplicity. In this example, a beam-space decompression processing/module 610 is added for converting the NAF data (beam domain data) back to the AAL domain (antenna domain). In this example, the beam-space decompression processing 610 is added after the equalizer 522 such that the beam domain data received from the RU 510 is equalized and then the remaining radar processing is performed in the antenna domain. The beam-space decompression 610 is equal to the inversion of RX beamforming. RX beamforming projects antenna domain signal into a beam domain signal which is a lower dimensional signal in examples, whereas the decompression projects the lower dimensional signal (the beam domain signal) back to the original higher dimensional signal (antenna domain signal). Provided all the information is captured in received signal, this can re-construct the original signal accurately. With this scheme, the conventional super resolution algorithm such as MUSIC, ESPRIT, etc. may be used for the angle resolution processing.

The system architecture for sensing fits into the O-RAN 7-2 split while the beam-compression is applied in the RU 510 to reduce the uplink throughput of the sensing data to be fit into the limited fronthaul capacity. With this scheme, the super resolution angle processing (e.g., MUSIC, ESPRIT, etc.) may be used by implementing beam decompression on the DU side to take the signal back to the antenna domain.

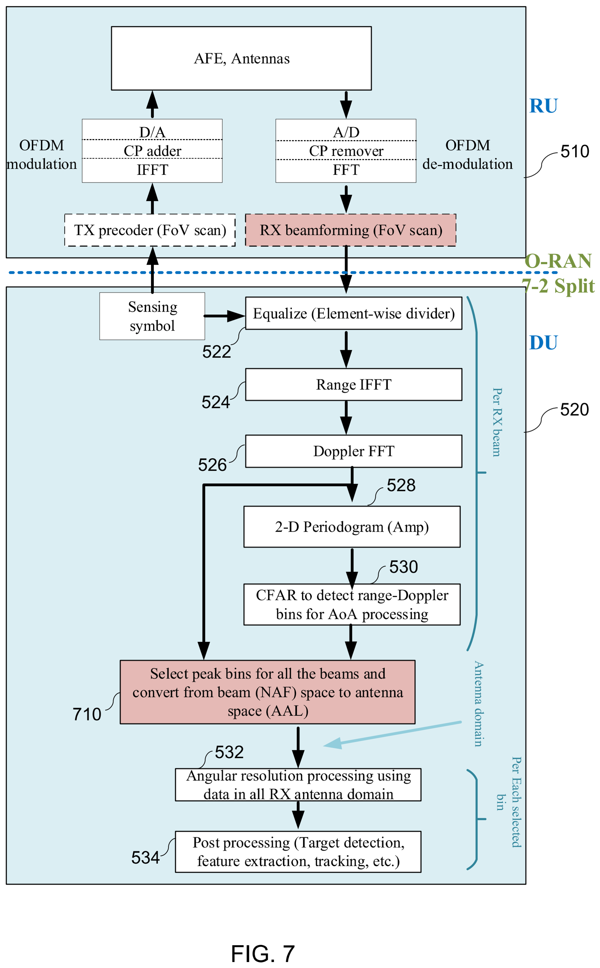

FIG. 7 shows another example system and signal processing flow for sensing in an O-RAN-compatible network for low complexity and high efficiency implementation. The system architecture and the signal processing flow in FIG. 6 are substantially similar to those in FIGS. 5 and 6. Therefore, the same elements and processing steps will not be explained again for simplicity. In this example, the sensing processing can be re-ordered without impacting sensing performance.

In this example, the beam-space decompression processing 710 is performed after the CFAR detection processing 530. The beam-space decompression processing 710 is the same processing as the beam-space decompression processing 610, i.e., decompression in spatial domain. In the processing 610, the decompression is applied to channel frequency response bins across beams (i.e., spatial domain). In the processing 710, the decompression is applied to range-Doppler domain bins across beams. The peak range-Doppler bins in the 2D periodogram are selected for all beams and the beam-space decompression (conversion from the NAF domain to the AAL domain) is performed on the peak range-Doppler bins data.

This architecture has several advantages compared to the system architecture shown in FIG. 6. In the system shown in FIG. 6, the range processing, Doppler processing, 2D periodogram calculation processing, and the CFAR detection processing are repeated for each RX antenna data. In the system in FIG. 7, these calculations (the range processing, Doppler processing, 2D periodogram calculation processing, and the CFAR detection processing) are repeated per RX beam. Since the number of RX beams (e.g., 8) is much smaller than the number of RX antennas (e.g., 64, 256, etc.) by design, the processing in FIG. 7 can be much simpler than the processing in FIG. 6.

Furthermore, in the system in FIG. 6, beam decompression is applied to all the OFDM time-frequency data before the range and Doppler processing. In the system in FIG. 7, beam-space decompression is applied only on the detected target bins in the range-Doppler map. Therefore, only a fraction of the bins needs to be processed compared to the processing in FIG. 6. For example, if OFDM symbols with 1024 subcarriers are used as sensing symbols, with sensing frame containing 512 sensing OFDM symbols, the number of time-frequency bins in FIG. 6 is 1024×512, whereas if 10 targets are used, assuming each target is dispersed over 8 range-doppler bins, only 80 range-Doppler bins need to be processed for decompression in FIG. 7.

In this example, the NAF to AAL conversion (the decompression processing 710 for the beam domain to antenna domain conversion) and the super resolution angle processing 532 may be performed by using a machine learning model. For example, a neural network or any artificial intelligence or machine learning model may be trained to do the super resolution angle processing by taking range-Doppler bins data in a beam domain (NAF domain). One way to perform the super resolution angle processing may be applying beam decompression, as described before, to take the NAF signal back to the AAL domain and then applying conventional super resolution angle estimation algorithms, such as MUSIC or Signal Parameters via Rotational Invariance Techniques (ESPRIT). In examples, universal function approximation property of neural networks (NN) may be used to train a NN to mimic the beam decompression and angle estimation as a single function. The NN module may be trained against the conventional solution mentioned above.

The systems in FIGS. 5-7 assume the O-RAN 7-2 split. Alternatively, in some examples, the RU and DU processing may be split differently for further fronthaul throughput reduction and some of the radar sensing processing may be moved from the DU to the RU to further reduce the fronthaul throughput without impacting the sensing performance.

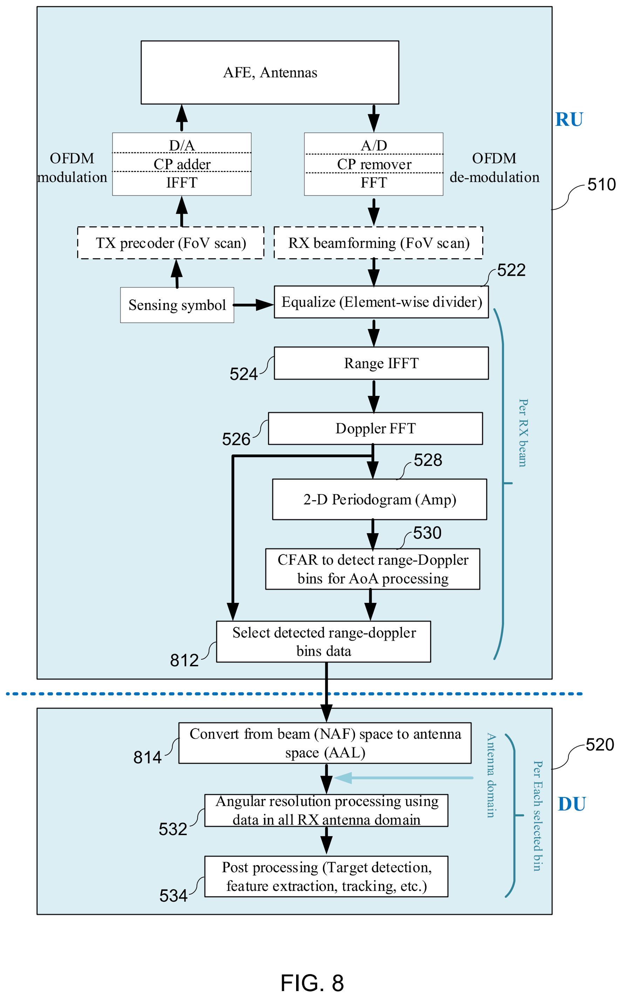

FIG. 8 shows an example of alternative RU-DU function split for sensing processing in an O-RAN-compatible network. The system architecture and the signal processing in FIG. 8 are similar to those in FIGS. 5-7. Therefore, the same elements and processing steps will not be explained again for simplicity. In this example, sensing processing up to the CFAR detection (i.e., the range processing 524, Doppler processing 526, 2-D periodogram processing 528, and the CFAR detection processing 530) may be performed in the RU 510 in the beam domain. The RU 510 may include processing circuitry to perform those sensing processing 524-530. The RU 510 may select the detected range-Doppler bins data (processing 812) and send the selected target range-Doppler bins data for each beam to the DU 520. The DU 520 then converts the target range-Doppler bins data in beam domain to the antenna domain (processing 814) and perform the angular resolution processing 532 and the post processing 534 using the data in all RX antenna domain. This can significantly reduce the fronthaul throughput needed for sensing. As mentioned before, both the uplink and downlink beamforming are controlled and programmed into the RU 510 by the DU 520. Therefore, the DU 520 has the full knowledge needed to decompress the range-Doppler bins data in the beam domain (NAF domain) into the antenna domain (AAL domain). This scheme may be implemented when the RU 510 has sufficient compute resources.

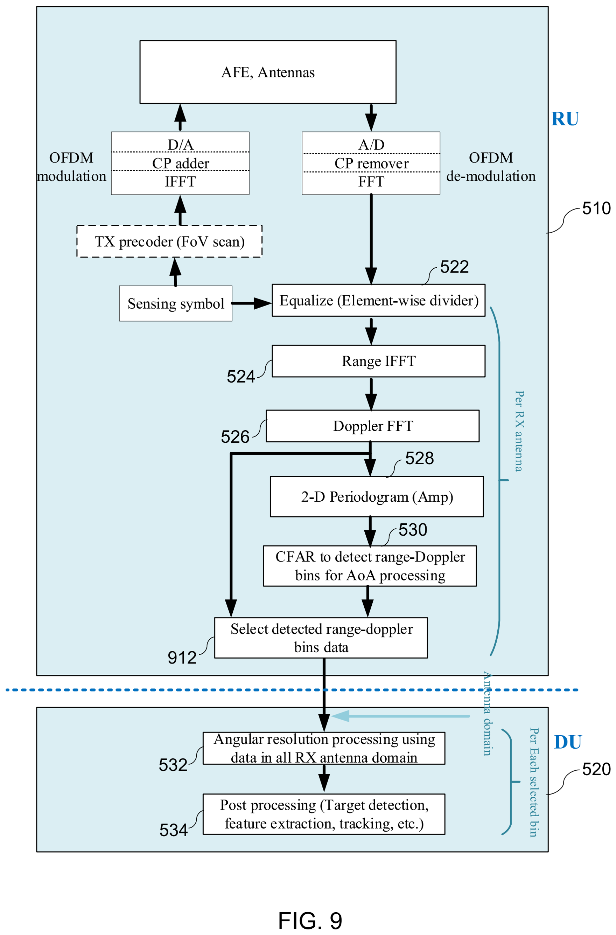

With this new (alternative) function split in FIG. 8, the fronthaul throughput can be reduced significantly. With this new function split, alternative processing architecture without the beam compression/RX beamforming can be implemented, which will be explained with reference to FIG. 9. This processing architecture also eliminates the need for beam decompression processing (i.e., converting the beam domain data to the antenna domain data), but increases the computations on the RU 510 as the RU 510 needs to calculate the 2-D range-Doppler processing for all antenna signals (as opposed to each beam in other examples).

FIG. 9 shows an example of alternative RU-DU function split for sensing processing without uplink beamforming (RX beamforming) in an O-RAN-compatible network. The system architecture and the signal processing in FIG. 9 are substantially similar to those in FIGS. 5-8. Therefore, the same elements and processing steps will not be explained again for simplicity. In this example, RX beamforming is not performed in the RU 510, and all radar sensing processing in the RU 510 and the DU 520 may be performed in the antenna domain. TX beamforming may be performed. In this example, sensing processing up to the CFAR detection (i.e., the range processing 524, Doppler processing 526, 2-D periodogram processing 528, and the CFAR detection processing 530) may be performed in the RU 510 in the antenna domain. The RU 510 may select detected range-Doppler bins (processing 912) and send the selected target range-Doppler bins data for each antenna to the DU 520. The DU 520 then performs the angular resolution processing 532 and the post processing 534 using the target range-Doppler bins data in the antenna domain per each selected range-Doppler bin.

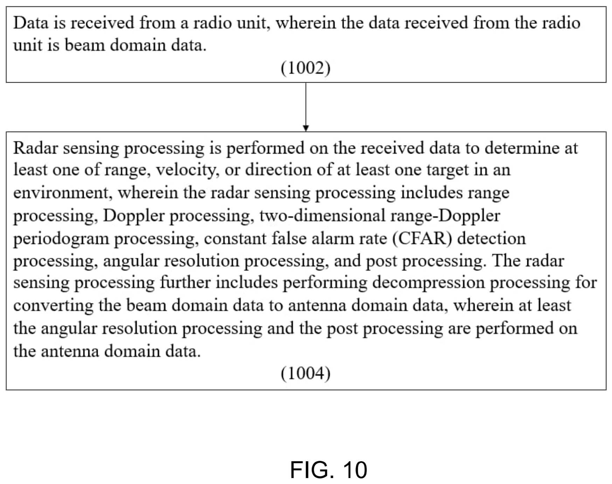

FIG. 10 is a flow diagram of an example method for radar sensing in a disaggregated radio access network. Data is received from a radio unit, wherein the data received from the radio unit is beam domain data (1002). Radar sensing processing is performed on the received data to determine at least one of range, velocity, or direction of at least one target in an environment, wherein the radar sensing processing includes range processing, Doppler processing, two-dimensional range-Doppler periodogram processing, constant false alarm rate (CFAR) detection processing, angular resolution processing, and post processing (1004). The radar sensing processing further includes performing decompression processing for converting the beam domain data to antenna domain data, wherein at least the angular resolution processing and the post processing are performed on the antenna domain data.

In some examples, the decompression processing may be performed after the CFAR detection processing. In some examples, the angular resolution processing may be performed only on selected peak bins data of a range-Doppler periodogram. In some examples, the decompression processing and the angle resolution processing may be performed by a machine learning model. In some examples, the decompression processing is performed before the range processing and the radar sensing processing is performed on the antenna domain data. In some examples, the data received from the radio unit is OFDM demodulated data and the method further includes performing subcarrier equalization on the OFDM demodulated data. In some examples, the angular resolution processing is performed by using algorithms such as MUSIC, ESPRIT, etc.

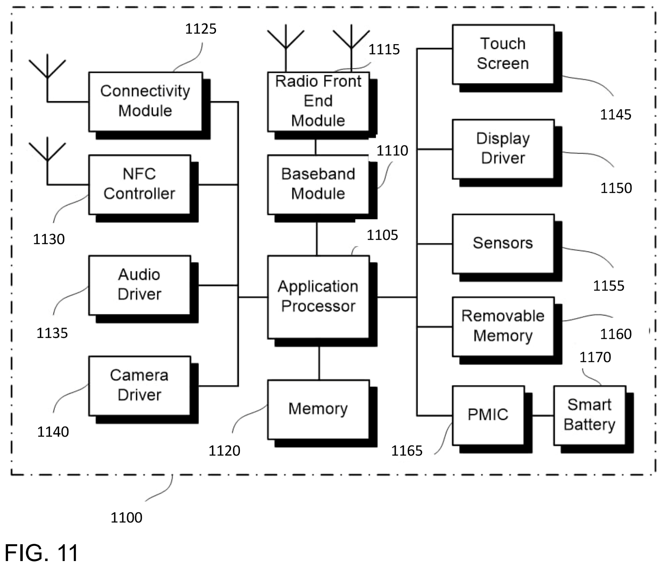

FIG. 11 illustrates a user device 1100 in which the examples disclosed herein may be implemented. For example, the examples disclosed herein may be implemented in the radio front-end module 1115, in the baseband module 1110, etc. The user device 1100 may be a mobile device in some aspects and includes an application processor 1105, baseband processor 1110 (also referred to as a baseband module), radio front end module (RFEM) 1115, memory 1120, connectivity module 1125, near field communication (NFC) controller 1130, audio driver 1135, camera driver 1140, touch screen 1145, display driver 1150, sensors 1155, removable memory 1160, power management integrated circuit (PMIC) 1165 and smart battery 1170.

In some aspects, application processor 1105 may include, for example, one or more CPU cores and one or more of cache memory, low drop-out voltage regulators (LDOs), interrupt controllers, serial interfaces such as serial peripheral interface (SPI), inter-integrated circuit (I2C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 1110 may be implemented, for example, as a solder-down substrate including one or more integrated circuits, a single packaged integrated circuit soldered to a main circuit board, and/or a multi-chip module containing two or more integrated circuits.

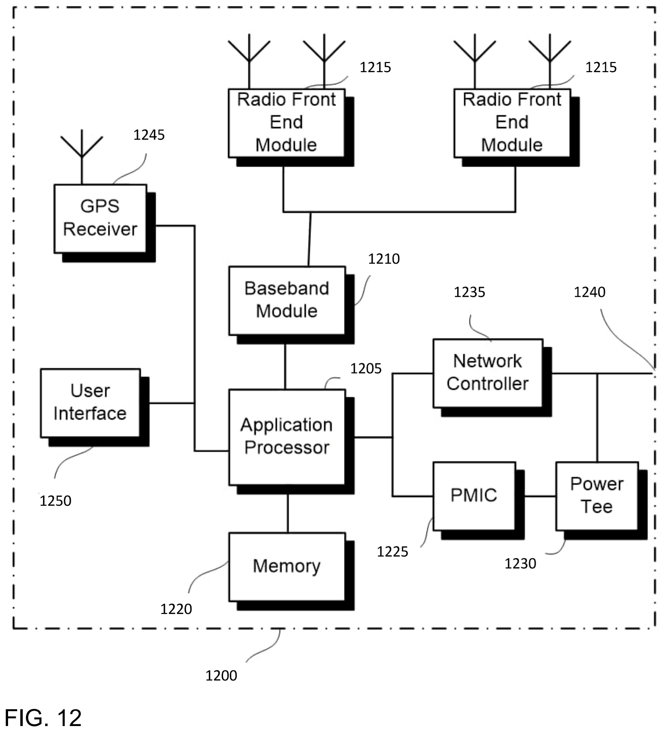

FIG. 12 illustrates a base station or infrastructure equipment radio head 1200 in which the examples disclosed herein may be implemented. For example, the examples disclosed herein may be implemented in the radio front-end module 1215, in the baseband module 1210, etc. The base station radio head 1200 may include one or more of application processor 1205, baseband modules 1210, one or more radio front end modules 1215, memory 1220, power management circuitry 1225, power tee circuitry 1230, network controller 1235, network interface connector 1240, satellite navigation receiver module 1245, and user interface 1250.

In some aspects, application processor 1205 may include one or more CPU cores and one or more of cache memory, low drop-out voltage regulators (LDOs), interrupt controllers, serial interfaces such as SPI, I2C or universal programmable serial interface module, real time clock (RTC), timer-counters including interval and watchdog timers, general purpose IO, memory card controllers such as SD/MMC or similar, USB interfaces, MIPI interfaces and Joint Test Access Group (JTAG) test access ports.

In some aspects, baseband processor 1210 may be implemented, for example, as a solder-down substrate including one or more integrated circuits, a single packaged integrated circuit soldered to a main circuit board or a multi-chip module containing two or more integrated circuits.

In some aspects, memory 1220 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magneto resistive random access memory (MRAM) and/or a three-dimensional crosspoint memory. Memory 1220 may be implemented as one or more of solder down packaged integrated circuits, socketed memory modules and plug-in memory cards.

In some aspects, power management integrated circuitry 1225 may include one or more of voltage regulators, surge protectors, power alarm detection circuitry and one or more backup power sources such as a battery or capacitor. Power alarm detection circuitry may detect one or more of brown out (under-voltage) and surge (over-voltage) conditions.

In some aspects, power tee circuitry 1230 may provide for electrical power drawn from a network cable to provide both power supply and data connectivity to the base station radio head 1200 using a single cable.

In some aspects, network controller 1235 may provide connectivity to a network using a standard network interface protocol such as Ethernet. Network connectivity may be provided using a physical connection which is one of electrical (commonly referred to as copper interconnect), optical or wireless.

In some aspects, satellite navigation receiver module 1245 may include circuitry to receive and decode signals transmitted by one or more navigation satellite constellations such as the global positioning system (GPS), Globalnaya Navigatsionnaya Sputnikovaya Sistema (GLONASS), Galileo and/or BeiDou. The receiver 1245 may provide data to application processor 1205 which may include one or more of position data or time data. Application processor 1205 may use time data to synchronize operations with other radio base stations.

In some aspects, user interface 1250 may include one or more of physical or virtual buttons, such as a reset button, one or more indicators such as light emitting diodes (LEDs) and a display screen.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:

An example (e.g., example 1) relates to an apparatus for radar sensing in a disaggregated radio access network. The apparatus includes interface circuitry configured to receive data from a radio unit, and processing circuitry configured to perform radar sensing processing on the received data to determine at least one of range, velocity, or direction of at least one target in an environment. The radar sensing processing includes range processing, Doppler processing, two-dimensional range-Doppler periodogram processing, constant false alarm rate (CFAR) detection processing, angular resolution processing, and post processing. The data received from the radio unit is beam domain data obtained by receive beamforming, and the processing circuitry is further configured to perform decompression processing for converting the beam domain data to antenna domain data and perform at least the angular resolution processing and the post processing on the antenna domain data.

Another example, (e.g., example 2) relates to a previously described example (e.g., example 1), wherein the processing circuitry is configured to perform the decompression processing after the CFAR detection processing.

Another example, (e.g., example 3) relates to a previously described example (e.g., example 2), wherein the processing circuitry is configured to perform the angular resolution processing only on selected peak bins data of a range-Doppler periodogram.

Another example, (e.g., example 4) relates to a previously described example (e.g., any one of examples 2-3), wherein the processing circuitry is configured to perform the decompression processing and the angle resolution processing using a machine learning model.

Another example, (e.g., example 5) relates to a previously described example (e.g., any one of examples 1-4), wherein the processing circuitry is configured to perform the decompression processing before the range processing and perform the radar sensing processing on the antenna domain data.

Another example, (e.g., example 6) relates to a previously described example (e.g., any one of examples 1-5), wherein the data received from the radio unit is orthogonal frequency division multiplex (OFDM) demodulated data and the processing circuitry is configured to perform subcarrier equalization on the OFDM demodulated data.

Another example, (e.g., example 7) relates to a previously described example (e.g., any one of examples 1-6), wherein the processing circuitry is configured to perform the angular resolution processing using MUSIC, ESPRIT, etc.

Another example, (e.g., example 8) relates to an apparatus for radar sensing in a disaggregated radio access network. The apparatus includes interface circuitry configured to receive data from a radio unit, and processing circuitry configured to perform radar sensing processing on the received data to determine at least one of range, velocity, or direction of at least one target in an environment, wherein the radar sensing processing includes angular resolution processing and post processing. The data received from the radio unit is detected range-Doppler bins data selected by the radio unit after performing range processing, Doppler processing, two-dimensional range-Doppler periodogram processing, and constant false alarm rate (CFAR) detection processing.

Another example, (e.g., example 9) relates to a previously described example (e.g., example 8), wherein the data received from the radio unit is beam domain data obtained by receive beamforming, and the processing circuitry is configured to perform decompression processing to convert the beam domain data to antenna domain data and perform the angular resolution processing and the post processing on the antenna domain data.

Another example, (e.g., example 10) relates to a previously described example (e.g., any one of examples 8-9), wherein the data received from the radio unit is antenna domain data.

Another example, (e.g., example 11) relates to a previously described example (e.g., any one of examples 8-10), wherein the circuitry is configured to perform the angular resolution processing using MUSIC, ESPRIT, etc.

Another example, (e.g., example 12) relates to a method for radar sensing in a disaggregated radio access network. The method includes receiving data from a radio unit, wherein the data received from the radio unit is beam domain data, and performing radar sensing processing on the received data to determine at least one of range, velocity, or direction of at least one target in an environment, wherein the radar sensing processing includes range processing, Doppler processing, two-dimensional range-Doppler periodogram processing, CFAR detection processing, angular resolution processing, and post processing. The radar sensing processing further includes performing decompression processing for converting the beam domain data to antenna domain data, wherein at least the angular resolution processing and the post processing are performed on the antenna domain data.

Another example, (e.g., example 13) relates to a previously described example (e.g., any one of examples 12), wherein the decompression processing is performed after the CFAR detection processing.

Another example, (e.g., example 14) relates to a previously described example (e.g., any one of examples 13), wherein the angular resolution processing is performed only on selected peak bins data of a range-Doppler periodogram.

Another example, (e.g., example 15) relates to a previously described example (e.g., any one of examples 13-14), wherein the decompression processing and the angle resolution processing are performed by a machine learning model.

Another example, (e.g., example 16) relates to a previously described example (e.g., any one of examples 12-15), wherein the decompression processing is performed before the range processing and the radar sensing processing is performed on the antenna domain data.

Another example, (e.g., example 17) relates to a previously described example (e.g., any one of examples 12-16), wherein the data received from the radio unit is OFDM demodulated data and the method further includes performing subcarrier equalization on the OFDM demodulated data.

Another example, (e.g., example 18) relates to a previously described example (e.g., any one of examples 12-17), wherein the angular resolution processing is performed by using algorithms such as MUSIC, ESPRIT, etc.

Another example, (e.g., example 19) relates to a machine-readable medium including code, when executed, to cause a machine to receive radio unit data, wherein the radio unit data is beam domain data, and perform radar sensing processing on the received radio unit data to determine at least one of range, velocity, or direction of at least one target in an environment, wherein the radar sensing processing includes range processing, Doppler processing, two-dimensional range-Doppler periodogram processing, constant false alarm rate (CFAR) detection processing, angular resolution processing, and post processing. The radar sensing processing further includes performing decompression processing for converting the beam domain data to antenna domain data, and at least the angular resolution processing and the post processing are performed on the antenna domain data.

Another example, (e.g., example 20) relates to a previously described example (e.g., example 19), wherein the decompression processing is performed after the CFAR detection processing.

Another example, (e.g., example 21) relates to a previously described example (e.g., any one of examples 19-20), wherein the angular resolution processing is performed on selected peak bins data of a range-Doppler periodogram.

Another example, (e.g., example 22) relates to a previously described example (e.g., any one of examples 19-21), wherein the decompression processing is performed before the range processing and the radar sensing processing is performed on the antenna domain data.

Another example, (e.g., example 23) relates to a previously described example (e.g., any one of examples 19-22), wherein the radio unit data is comprised of OFDM demodulated data and the code is further to cause the machine to perform subcarrier equalization on the OFDM demodulated data.

Another example, (e.g., example 24) relates to a previously described example (e.g., any one of examples 19-23), wherein the angular resolution processing is performed by using MUSIC or ESPRIT algorithm.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F) PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. An apparatus, comprising:

   interface circuitry (310) configured to receive radio unit data; and
   processing circuitry (320) configured to perform radar sensing processing on the received radio unit data to determine at least one of range, velocity, or direction of at least one target in an environment, wherein the radar sensing processing includes range processing, Doppler processing, two-dimensional range-Doppler periodogram processing, constant false alarm rate, CFAR, detection processing, angular resolution processing, and post processing,
   wherein the radio unit data comprises beam domain data, and the processing circuitry (320) is further configured to perform decompression processing for converting the beam domain data to antenna domain data and perform at least the angular resolution processing and the post processing on the antenna domain data.

2. The apparatus of claim 1, wherein the processing circuitry (320) is configured to perform the decompression processing after the CFAR detection processing.

3. The apparatus of claim 2, wherein the processing circuitry (320) is configured to perform the angular resolution processing on selected peak bins data of a range-Doppler periodogram.

4. The apparatus of claim 2 or 3, wherein the processing circuitry (320) is configured to perform the decompression processing and the angle resolution processing using a machine learning model.

5. The apparatus of claim 1, wherein the processing circuitry (320) is configured to perform the decompression processing before the range processing and perform the radar sensing processing on the antenna domain data.

6. The apparatus as in any one of claims 1-5, wherein the radio unit data is comprised of orthogonal frequency division multiplex, OFDM, demodulated data and the processing circuitry (320) is configured to perform subcarrier equalization on the OFDM demodulated data.

7. The apparatus as in any one of claims 1-6, wherein the processing circuitry (320) is configured to perform the angular resolution processing using Multiple Signal Classification, MUSIC, or Signal Parameters via Rotational Invariance Techniques, ESPRIT, algorithm.

8. A method for radar sensing in a disaggregated radio access network, comprising:

   receiving (1002) radio unit data, wherein the radio unit data is beam domain data; and
   performing (1004) radar sensing processing on the received radio unit data to determine at least one of range, velocity, or direction of at least one target in an environment, wherein the radar sensing processing includes range processing, Doppler processing, two-dimensional range-Doppler periodogram processing, constant false alarm rate, CFAR, detection processing, angular resolution processing, and post processing,
   wherein the radar sensing processing further includes performing decompression processing for converting the beam domain data to antenna domain data, and at least the angular resolution processing and the post processing are performed on the antenna domain data.

9. The method of claim 8, wherein the decompression processing is performed after the CFAR detection processing.

10. The method of claim 9, wherein the angular resolution processing is performed on selected peak bins data of a range-Doppler periodogram.

11. The method of claim 9 or 10, wherein the decompression processing and the angle resolution processing are performed by a machine learning model.

12. The method of claim 8, wherein the decompression processing is performed before the range processing and the radar sensing processing is performed on the antenna domain data.

13. The method as in any one of claims 8-12, wherein the radio unit data is comprised of orthogonal frequency division multiplex, OFDM, demodulated data and the method further includes performing subcarrier equalization on the OFDM demodulated data.

14. The method as in any one of claims 8-13, wherein the angular resolution processing is performed by using Multiple Signal Classification, MUSIC, or Signal Parameters via Rotational Invariance Techniques, ESPRIT, algorithm.

15. A machine-readable medium including code, when executed, to cause a machine to perform the method as in any one of claims 8-14.

FIG. 1

FIG. 2

300

Interface
circuitry
(310)

Processing
circuitry
(320)

FIG. 3

FIG. 4

FIG. 5

FIG. 6

FIG. 7

**RU**

AFE, Antennas

OFDM modulation

| D/A |
| CP adder |
| IFFT |

| A/D |
| CP remover |
| FFT |

OFDM de-modulation

510

TX precoder (FoV scan)

RX beamforming (FoV scan)

Sensing symbol → Equalize (Element-wise divider) — 522

Range IFFT — 524

Doppler FFT — 526

2-D Periodogram (Amp) — 528

CFAR to detect range-Doppler bins for AoA processing — 530

Select detected range-doppler bins data — 812

Per RX beam

**DU**

Convert from beam (NAF) space to antenna space (AAL) — 814

Angular resolution processing using data in all RX antenna domain — 532

Post processing (Target detection, feature extraction, tracking, etc.) — 534

520

Antenna domain

Per Each selected bin

FIG. 8

**FIG. 9**

Data is received from a radio unit, wherein the data received from the radio unit is beam domain data.

(1002)

Radar sensing processing is performed on the received data to determine at least one of range, velocity, or direction of at least one target in an environment, wherein the radar sensing processing includes range processing, Doppler processing, two-dimensional range-Doppler periodogram processing, constant false alarm rate (CFAR) detection processing, angular resolution processing, and post processing. The radar sensing processing further includes performing decompression processing for converting the beam domain data to antenna domain data, wherein at least the angular resolution processing and the post processing are performed on the antenna domain data.

(1004)

FIG. 10

FIG. 11

FIG. 12

Europäisches
Patentamt
European
Patent Office
Office européen
des brevets

# EUROPEAN SEARCH REPORT

**Application Number**

EP 25 21 8430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHRAGVI SIDHARTH JHA ET AL: "Hardware Software Co-Design Based Reconfigurable Radar Signal Processing Accelerator for Joint Radar-Communication System", ARXIV.ORG CORNELL UNIVERSITY LIBRARY, 201 OLIN LIBRARY CORNELL UNIVERSITY ITHACA, NY 14853, 3 March 2023 (2023-03-03), XP091451930, * abstract; figures 1,3,4 * * pages 2,4,5,11 * | 1-15 | INV. G01S13/82 ADD. G01S13/42 H04W16/28 G01S7/35 |
| A | SHATOV VICTOR ET AL: "Joint Radar and Communications: Architectures, Use Cases, Aspects of Radio Access, Signal Processing, and Hardware", IEEE ACCESS, vol. 12, 1 January 2024 (2024-01-01), pages 47888-47914, XP093395186, USA ISSN: 2169-3536, DOI: 10.1109/access.2024.3383771 * the whole document * | 1-15 | |

**TECHNICAL FIELDS SEARCHED (IPC)**

G01S
H04W

The present search report has been drawn up for all claims

| Place of search | Date of completion of the search | Examiner |
|---|---|---|
| Munich | 11 May 2026 | Riccio, Ettore |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)